# EUROPÄISCHE PATENTSCHRIFT

(11) **EP 2 076 351 B1**
(45) Veröffentlichungstag und Bekanntmachung des Hinweises auf die Patenterteilung: **23.02.2011**
(21) Anmeldenummer: 07784628.5
(22) Anmeldetag: 22.08.2007
(51) Int. Cl.: B23K 9/29

(54) **EINSATZELEMENT, GASLINSE MIT EINEM SOLCHEN EINSATZELEMENT UND SCHWEIßBRENNER MIT EINER SOLCHEN GASLINSE**
INSERT ELEMENT, GAS LENS COMPRISING SUCH AN INSERT ELEMENT, AND WELDING TORCH COMPRISING SUCH A GAS LENS
ÉLÉMENT D'INSERTION, LENTILLE DE GAZ ÉQUIPÉE DE CET ÉLÉMENT D'INSERTION, ET CHALUMEAU DE SOUDAGE POURVU DE CETTE LENTILLE DE GAZ

(30) Priorität: 12.10.2006 AT 17022006
(43) Veröffentlichungstag der Anmeldung: 08.07.2009
(73) Patentinhaber: Fronius International GmbH, 4643 Pettenbach (AT)
(72) Erfinder: FESSL, Jochen, A-4644 Scharnstein (AT); GEBESMAIR, Melanie, A-4542 Nussbach (AT); LEEB, Josef, A-4643 Pettenbach (AT)
(74) Vertreter: Sonn & Partner Patentanwälte
(86) Internationale Anmeldenummer: PCT/AT2007/000400
(87) Internationale Veröffentlichungsnummer: WO 2008/043114

(56) Entgegenhaltungen:
- EP-A- 0 094 984
- US-A- 5 772 102
- US-A1- 2002 134 760

## Beschreibung

Die Erfindung betrifft eine Gaslinse für einen WIG/TIG-Schweißbrenner und einen WIG/TIG-Schweißbrenner gemäß den Oberbegriffen der Patentansprüche 1 und 3.

Aus dem Stand der Technik sind WIG/TIG-Schweißbrenner bekannt, bei denen eine Gaslinse im Brennerkörper eingesetzt wird, in dessen Gasverteilerraum mehrere Gaslinsensiebe angeordnet sind. Die Gaslinsensiebe werden dabei immer voneinander distanziert angeordnet, sodass sich im Hohlraum zwischen dem Grundkörper der Gaslinse und Gaslinsensieb, sowie zwischen den Gaslinsensieben das Gas entsprechend ausbreiten kann.

Die EP 94 984 A1 sowie die US 5,772,102 A beschreiben Beispiele für Gaslinsen für einen WIG/TIG-Schweißbrenner des Standes der Technik.

Die US 2002/0134760 A1 beschreibt eine Gaslinse für einen WIG/TIG-Schweißbrenner, welche radiale Bohrungen für die Zuführung eines Gases aufweist.

Nachteilig ist hierbei, dass für eine gute Gasverteilung ein entsprechend großer Hohlraum zwischen den Gaslinsensieben vorgesehen werden muss, wodurch die Baugröße der Gaslinse entsprechend groß ausgebildet werden muss. Weiters ist es gemäß dem Stand der Technik erforderlich, mehrere Gaslinsensiebe zu verwenden, um einen entsprechenden Rückstau zu bilden. Wird beispielsweise nur ein Gaslinsensieb eingesetzt, kann es passieren, dass sich das einströmende Gas in den Hohlraum vor dem Gaslinsensieb nicht gleichmäßig über den Querschnitt ausbreitet und somit nicht gleichmäßig in die anschließende Gasdüse durch das Gaslinsensieb einströmt. Dies kann durch den Einsatz mehrer Gaslinsensiebe verhindert werden, da in jedem Hohlraum vor den Gaslinsensieben ein entsprechender Rückstau entsteht und somit eine Verteilung des Gases durchgeführt wird. Je mehr Gaslinsensiebe eingesetzt werden, umso besser wird die Gasverteilung über den Querschnitt.

Die Aufgabe der Erfindung besteht in der Schaffung einer Gaslinse für einen WIG/TIG-Schweißbrenner und eines WIG/TIG-Schweißbrenners, durch die eine bessere Gasverteilung über den Querschnitt der Gaslinse und somit auch über den Querschnitt der Gasdüse erreicht werden kann. Die Baugröße und das Gewicht der Komponenten sollen möglichst gering sein.

Die Aufgabe der Erfindung wird durch eine oben genannte Gaslinse gelöst, bei der im Gasverteilungskanal des Grundköpers ein Einsatzelement mit einer Bohrung im Zentrum zum Durchführen einer nicht abschmelzenden Elektrode angeordnet ist, um welche Bohrung fächerförmige Strömungselemente ausgebildet sind, die in Bezug zur Ebene der Bohrung verdreht ausgebildet sind, so dass eine radiale Ablenkung eines durchströmenden Gases erfolgt, und in Richtung der Ausströmung des Gases gesehen nach dem Einsatzelement ein Gaslinsensieb angeordnet ist. Vorteilhaft ist hierbei, dass bei einer Anwendung des Einsatzelements in einer Gaslinse das geradlinig einströmende Gas über die fächerförmigen Strömungselemente abgelenkt wird. Damit wird das Gas in Rotation gebracht und eine bessere Verteilung des Gases erreicht. Bei einer Anwendung eines derartig ausgebildeten Einsatzelements kann für eine optimale Gasverteilung der anschließende Hohlraum sehr klein ausgebildet werden, da aufgrund der verursachten Rotation des Gases eine schnellere und bessere Ausbreitung des Gases über den Hohlraum ermöglicht wird, wodurch das Gas vollflächig und gleichmäßig durch das Gaslinsensieb strömen kann. Durch die Verwendung lediglich eines Einsatzelements und eines Gaslinsensiebes kann die Baugröße der Gaslinse reduziert werden. Durch die spezielle Ausbildung des Einsatzelements können die vor diesem und nach diesem notwendigen Hohlräume für die Gasverteilung möglichst klein gehalten werden, was wiederum die gesamte Baugröße der Gaslinse reduziert, jedoch eine optimale Gasverteilung über den Querschnitt der Gaslinse ermöglicht.

Durch eine derartige Verkleinerung der Gaslinse auf eine Länge von beispielsweise 20 bis 30 mm wird die Baugröße und das Gewicht, auch der Brennerkörper des Schweißbrenners reduziert und die Handhabung des Schweißbrenners verbessert.

Die Aufgabe der Erfindung wird auch durch einen oben genannten WIG/TIG-Schweißbrenner gelöst, bei dem die Gaslinse entsprechend den Ansprüchen 1 bis 2 ausgebildet ist.

Weitere vorteilhafte Ausgestaltungen sind in den einzelnen Unteransprüchen beschrieben. Die sich daraus ergebenden Vorteile können aus der Beschreibung entnommen werden.

Die Erfindung wird anschließend durch Ausführungsbeispiele näher beschrieben.

Es zeigen:
Fig. 1 eine schematische Darstellung eines Schweißbrenners;
Fig. 2 eine schematische geschnittene Darstellung des Brennerkörpers;
Fig. 3 eine Explosionsdarstellung der einzelnen Elemente des Brennerkörpers;
Fig. 4 einen Schrägriss einer Gaslinse für den Brennerkörper;
Fig. 5 eine Draufsicht auf die Gaslinse;
Fig. 6 einen Schnitt durch die Gaslinse gemäß Fig. 4;
Fig. 7 eine Draufsicht auf ein Einsatzelement für die Gaslinse;
Fig. 8 eine Seitenansicht des Einsatzelements gemäß Fig. 7 in vereinfachter Darstellung;
Fig. 9 einen Schrägriss eines Siebes für die Gaslinse;
Fig. 10 eine Draufsicht auf das Gaslinsensieb gemäß Fig. 9 in vereinfachter Darstellung;
Fig. 11 einen Schrägriss einer Ausführungsvariante der Gaslinse;
Fig. 12 eine Draufsicht auf die Gaslinse nach Fig. 11;
Fig. 13 einen Schnitt durch die Gaslinse nach Fig. 11;
Fig. 14 einen Schrägriss einer Lichtbogendüse;
Fig. 15 eine teilweise geschnittene Darstellung der Lichtbogendüse gemäß Fig. 14;
Fig. 16 einen Schnitt durch einen Schweißbrenner mit der Lichtbogendüse gemäß Fig. 14 in vereinfachter Darstellung; und
Fig. 17 eine schematische Darstellung des Schweißbrenners mit der Lichtbogendüse.

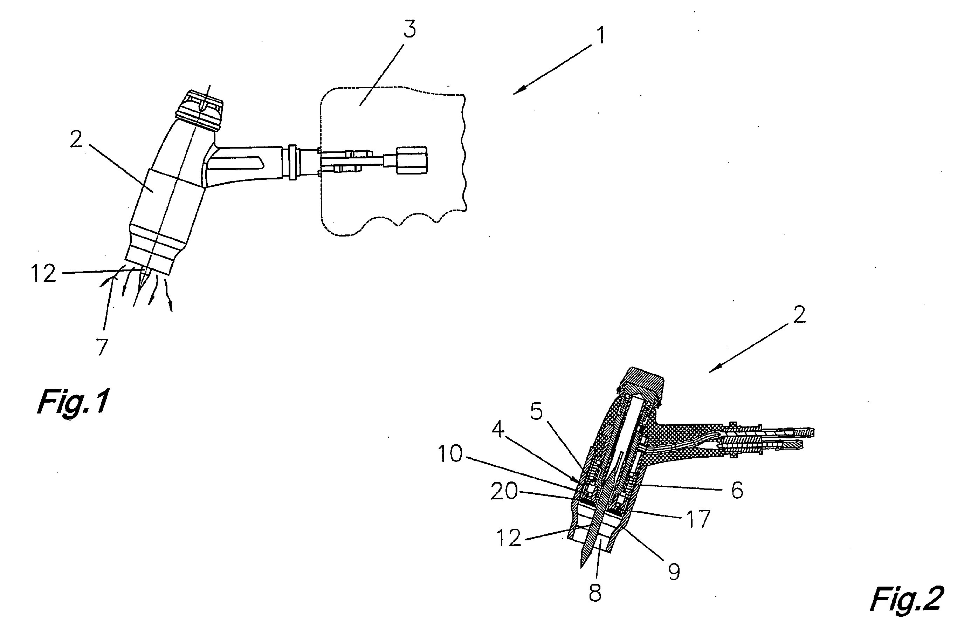

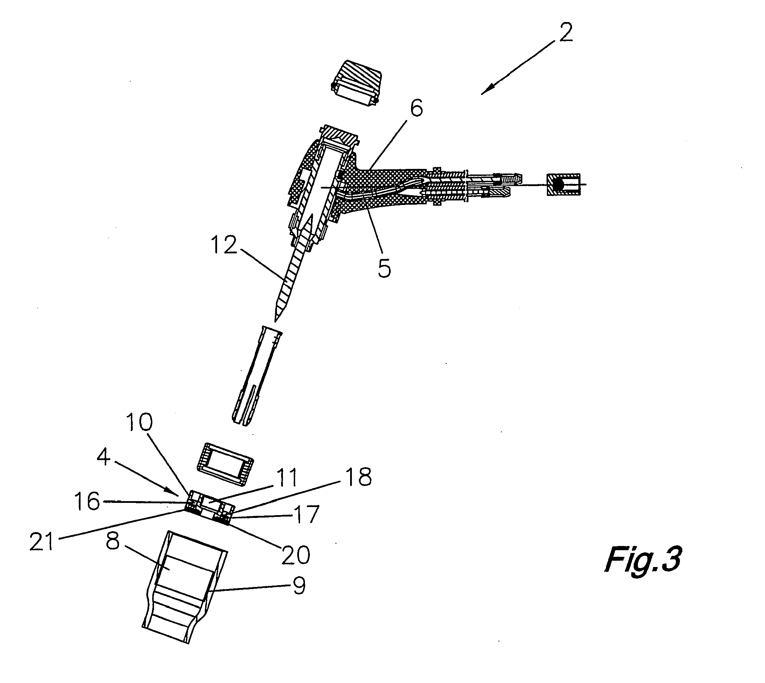

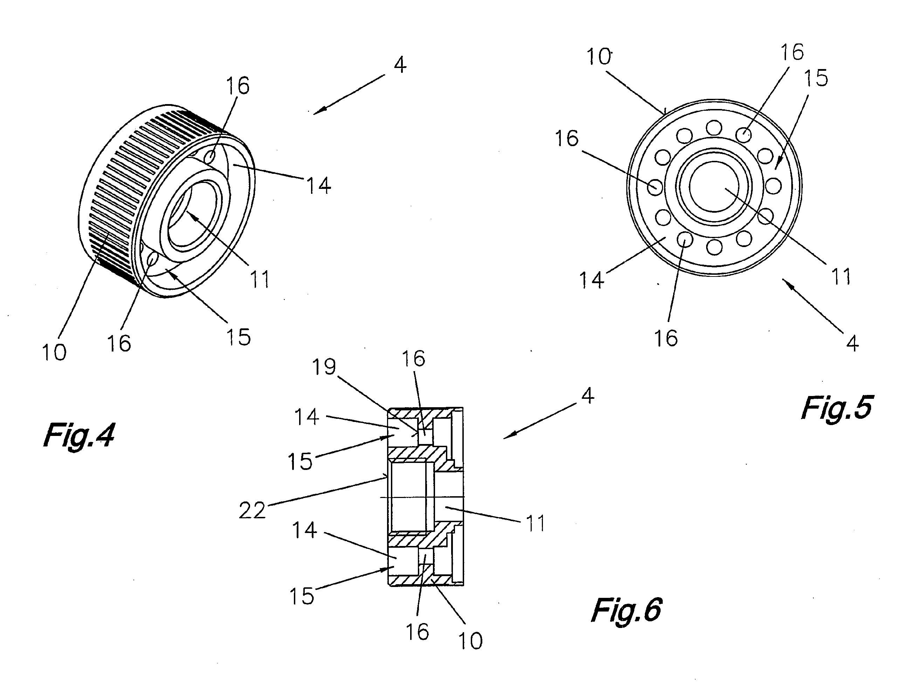

In den Fig. 1 bis 10 ist ein WIG/TIG-Schweißbrenner 1 dargestellt. Der Schweißbrenner 1 besteht aus einem Brennerkörper 2 und einem Brennergriff 3 (strichliert dargestellt). Dabei entsprechen die einzelnen Komponenten des Schweißbrenners 1 dem Aufbau gemäß dem Stand der Technik, sodass auf diese Komponenten und deren Funktion nicht mehr näher eingegangen wird.

Bei der Erfindung handelt es sich um eine Detaillösung für ein Gaslinse 4 im Brennerkörper 2, welche für die Verteilung des über Gasführungskanäle 5 im Grundelement 6 zugeführten Gases 7 verwendet wird. Das über das Grundelement 6 zugeführte Gas 7 strömt vom Grundelement 6 in die Gaslinse 4 ein, und wird anschließend über den Querschnitt der Gaslinse 4 verteilt. Dadurch wird beim Austritt des Gases 7 aus der Gaslinse 4 und somit beim Eintritt in einen Innenraum 8 einer Gasdüse 9 eine optimale Gasverteilung in der Gasdüse 9 erreicht. Wesentlich dabei ist, dass die Baugröße der Gaslinse 4 möglichst klein gehalten wird, da damit die gesamte Baugröße des Schweißbrenners 1 verringert und somit die Handhabung des Schweißbrenners 1 wesentlich verbessert werden kann.

Die Gaslinse 4 besteht aus einem Grundkörper 10, welcher bevorzugt aus Kupfer oder einer Kupferlegierung gebildet ist. Im Zentrum der Gaslinse 4 ist eine durchgehende Öffnung 11 angeordnet, durch die eine Elektrode 12 und gegebenenfalls eine Lichtbogendüse 13 geführt werden können. Weiters weist der Grundkörper 10 eine Vertiefung 14 zur Bildung des Gasverteilungsraums 15 auf. Im Grundkörper 10 sind stirnseitig Bohrungen 16 vorgesehen, die in den Gasverteilungsraum 15 führen. Über die Bohrungen 16 kann das Gas 7 über die Gasführungskanäle 5 vom Grundelement 6 in den Gasverteilungsraum 15 strömen.

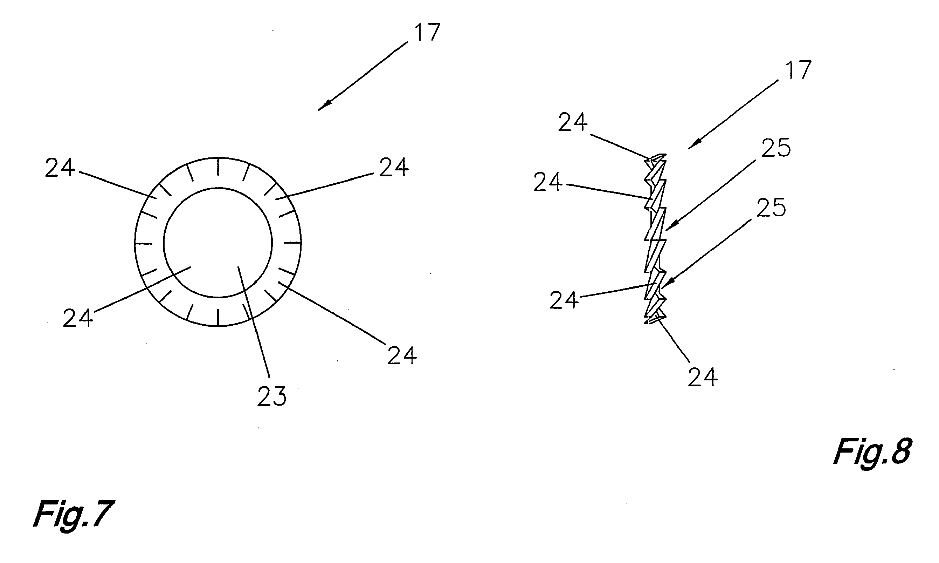

Zur Erreichung einer optimalen Gasverteilung über den gesamten Querschnitt des Gasverteilungsraumes 15 ist im Gasverteilungsraum 15 ein Einsatzelement 17 angeordnet, welches in den Fig. 7 und 8 im Detail dargestellt ist. Das Einsatzelement 17 wird derart im Gasverteilungsraum 15 angeordnet, dass sich zwischen dem Austrittsbereich der Bohrungen 16 und dem Einsatzelement 17 ein schmaler Hohlraum 18 bildet. Dabei kann das Einsatzelement 17 entsprechende Vorsprünge aufweisen, die eine entsprechende Distanz zur Stirnfläche 19 des Gasverteilungsraumes 15 erzeugen. Es ist aber auch möglich, in der Vertiefung 14 bzw, dem Gasverteilungsraum 15 einen Steg anzuordnen, auf dem ein einfach hergestelltes Einsatzelement 17 aufgesetzt wird.

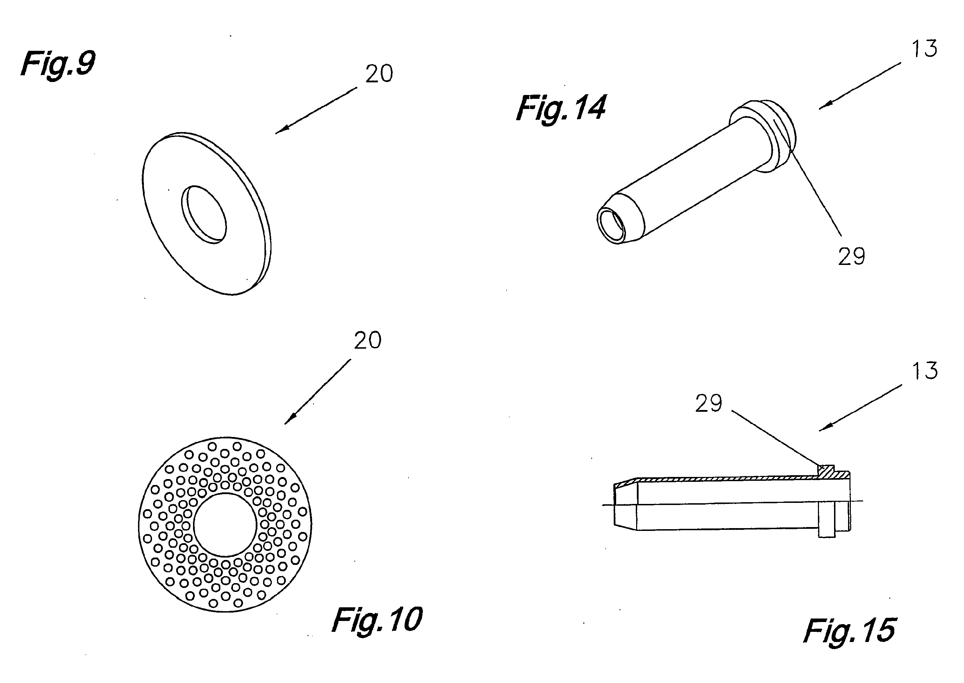

Anschließend wird mit einer geringen Distanz zum Einsatzelement 17 ein aus dem Stand der Technik bekanntes Gaslinsensieb 20 (Fig. 9 und 10), in den Gasverteilungsraum 15 eingesetzt. Hierbei können am Gaslinsensieb 20 zur Bildung eines Hohlraumes 21 zwischen dem Gaslinsensieb 20 und dem Einsatzelement 17 wiederum Vorsprünge angeordnet werden, die eine entsprechende Distanz zum Einsatzelement 17 bilden oder am Grundkörper 10 Stege angeordnet werden, an welchen das Gaslinsensieb 20 positioniert wird. Bevorzugt erfolgt die Positionierung des Gaslinsensiebes 20 fluchtend zur Stirnfläche 22 des Grundkörpers 10 der Gaslinse 4. Das Gaslinsensieb 20 besteht aus einer Vielzhal kleiner Löcher, durch die das Gas 7 in die Gasdüse 9 strömen kann. Dabei wird einerseits ein gewisser Gasrückstau im Hohlraum 21 zwischen dem Gaslinsensieb 20 und dem Einsatzelement 17 erreicht. Dieser Gasrückstau ist insofern notwendig, dass sich das Gas 7 im Hohlraum 21 vollständig verteilen kann und anschließend durch das Gaslinsensieb 20 vollflächig in die Gasdüse 9 strömen kann.

Damit eine optimale Verteilung des Gases 7 im Hohlraum 21 erreicht wird, weist das Einsatzelement 17 eine entsprechende Form auf, welche im Zentrum eine Bohrung 23 zur Durchführung der Elektrode 12 besitzt, die korrespondierend zur Öffnung 11 im Grundkörper 10 der Gaslinse 4 ausgebildet ist. Wie aus den Fig. 7 und 8 ersichtlich ist, weist das Einsatzelement 17 fächerförmige Strömungselemente 24 auf, die in Bezug zur Ebene der Bohrung 23 verdreht ausgebildet sind, sodass eine radiale Ablenkung des durchströmenden Gases 7 erfolgt. Daher werden zwischen den einzelnen Strömungselementen 24 Kanäle 25 gebildet, sodass das über die Bohrung 16 in den Hohlraum 18 zwischen dem Einsatzelement 17 und der Stirnfläche des Grundkörpers 10 zugeführte Gas 7 durch diese schräg verlaufenden Kanäle 25 des Einsatzelements 17 in den weiteren Hohlraum 21 zwischen dem Einsatzelement 17 und dem Gaslinsensieb 20 strömen muss.

Durch diese schräg verlaufenden Kanäle 25 wird das durchströmende Gas 7 in Rotation gebracht, sodass sich das Gas 7 in dem weiteren Hohlraum 21 zwischen dem Einsatzelement 17 und dem Gaslinsensieb 20 weiter dreht. Durch diese Gasdrehung wird eine wesentlich bessere Gasverteilung im Hohlraum 21 erreicht. Durch das in Drehung-Versetzen des Gases 7 kann die Größe des Hohlraumes 21 sehr gering gehalten werden. Beispielsweise kann die Distanz zwischen dem Einsatzelement 17 und dem Gasdüsensieb 20 nur 1 mm bis 3 mm betragen. Dies wirkt sich wesentlich auf die gesamte Baugröße der Gaslinse 4 und somit auf die Größe des Brennerkörpers 3 aus.

Vergleicht man die bekannten Lösungen des Standes der Technik, so weisen die meisten Gaslinsen 4 mehrere derartige Gaslinsensiebe 20 auf, zwischen denen jeweils ein Hohlraum 18 oder 21 gebildet werden muss. Da jedoch beim Stand der Technik immer nur ein gerader Gasstrom durch die Gaslinsensiebe 20 vorhanden ist, müssen für eine gute Gasverteilung die Hohlräume 18 oder 21 wesentlich größer ausgebildet werden, um einen besseren Gasrückstau in den Hohlräumen 18 oder 21 und somit eine bessere Gasverteilung über den Querschnitt zu erreichen. Somit wird beim Stand der Technik eine wesentlich längere Gaslinse 4 benötigt, als es bei der erfindungsgemäßen Gaslinse 4 der Fall ist.

Bei der erfindungsgemäßen Gaslinse 4 kann die Länge 26 gegenüber derzeit eingesetzten Gaslinsen um die Hälfte reduziert werden. Beispielsweise kann bei optimaler Gasverteilung durch das Einsatzelement 17 die Länge 26 der Gaslinse 4 zwischen 20 mm und 30 mm betragen. Durch diese geringe Baugröße kann nunmehr der gesamte Brennerkörper 2 kleiner und leichter gebaut und somit die Handhabung des Schweißbrenners 1 verbessert werden.

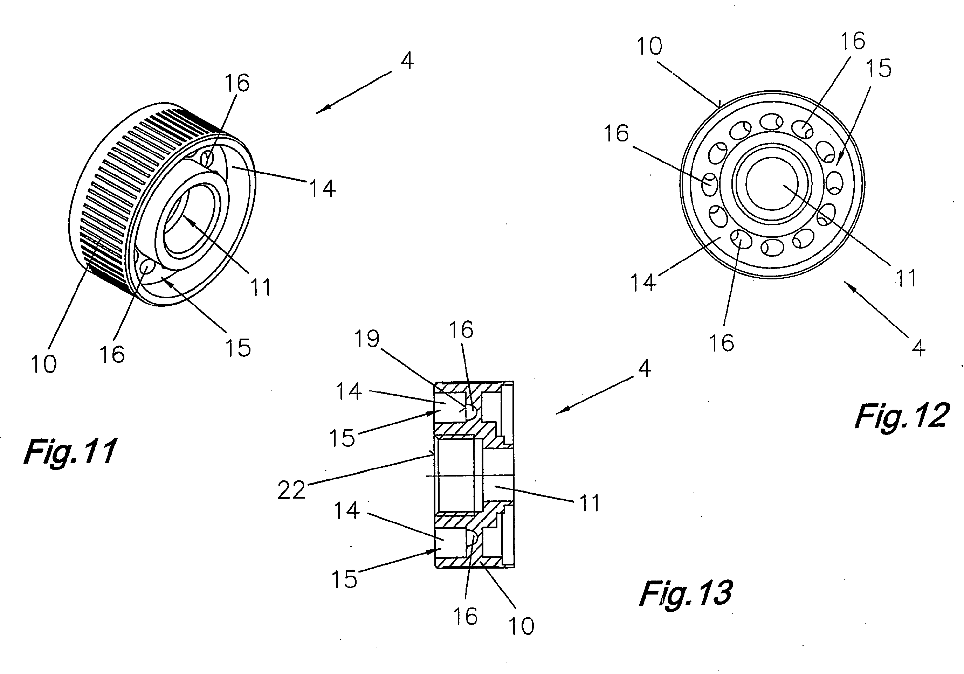

Ein weiteres Ausführungsbeispiel der Gaslinse 4 ist in den Fig. 11 bis 13 dargestellt. Der Unterschied zu der zuvor beschriebenen Gaslinse 4 besteht darin, dass auf das Einsatzelement 17 verzichtet wird. Um jedoch wiederum eine Rotation des Gases 7 vor dem Austritt aus dem Gaslinsensieb 20 zu erreichen, verlaufen nunmehr die Bohrungen 16 im Grundkörper 10 der Gaslinse 4 nicht wie üblich geradlinig, sondern es werden die Bohrungen 16 winkelig zur Längsmittelachse der Gasdüse 9 angeordnet, sodass das vom Gasführungskanal 5 zugeführte Gas 7 schräg in den Hohlraum 18 zwischen einer Stirnfläche des Grundkörpers 10 und dem Gaslinsensieb 20 einströmt. Aufgrund des Gasrückstaus im Hohlraum 18 beginnt sich das schräg einströmende Gas 7 im Hohlraum 18 zu drehen und dadurch wird in einem möglichst kleinen Hohlraum 18 eine optimale Gasverteilung über den gesamten Querschnitt erreicht.

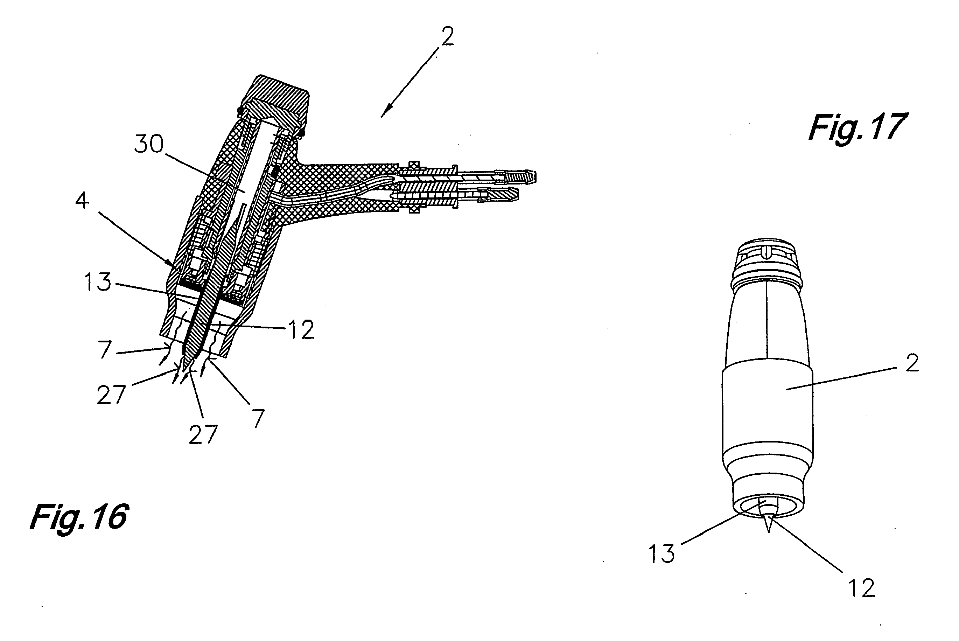

In den Fig. 14 bis 17 ist eine Lichtbogendüse 13 im Detail dargestellt, die für den Einsatz des Schweißbrenners 1 bei Verwendung zweier unterschiedlicher Gase 7 und 27 verwendet werden kann.

Die Lichtbogendüse 13 ist rohrförmig ausgebildet, wobei der Innendurchmesser einen größeren Durchmesser aufweist, als die durch die Lichtbogendüse 13 zu führende Elektrode 12. An einem Ende weist die Lichtbogendüse 13 bevorzugt einen Anschlagsteg 29 auf, über den die Lichtbogendüse 13 in der Gaslinse 4 positioniert werden kann. Die Lichtbogendüse 13 hat zur Aufgabe, ein über das Zentrum 30 des Brennerkörpers 2 zugeführtes erstes Gas 27 möglichst nahe an die Schweißstelle zu führen, ohne dass sich dieses erste Gas 27 mit dem weiteren Gas 7, welches von der Gaslinse 4 über die Gasdüse 9 an die Schweißstelle geführt wird, vermischt wird. Die Lichtbogendüse 13 wird bevorzugt dann eingesetzt, wenn ein Schweißprozess mit zwei unterschiedlichen Gasen 7 und 27 durchgeführt werden soll, wobei das erste Gas 27 zur Stabilisierung des Lichtbogens und das zweite Gas 7, welches um die erste sogenannte Gasglocke angeordnet ist, zum Schutz gegen äußere atmosphärische Einflüsse auf den Schweißprozess dient.

Durch dieses System mit der Lichtbogendüse 13 kann der Schweißbrenner 1 in einfacher Form auf einen Brenner, der für zwei Gase verwendet werden kann, umgerüstet werden. Somit kann durch Einsetzen einer solchen Lichtbogendüse 13 über die Elektrode 12 bzw. einen Elektrodenführungskanal ein zusätzliches Gas 27 an den Schweißprozess geleitet werden, wobei dieses über die Lichtbogendüse 13 möglichst nahe an den Schweißprozess geführt wird, bevor es mit dem weiteren, über die Gaslinse 4 und die Gasdüse 9 zugeführte Gas 7 in Kontakt kommt. Somit kann je nach Länge der eingesetzten Lichtbogendüse 13 der Kontakt des ersten Gases 27 mit dem zweiten Gas 7 abgestimmt werden.

Es kann selbstverständlich auch nur ein Gas 7 oder 27 eingesetzt werden und durch den Einsatz der Lichtbogendüse 13 im Zentrum um die Elektrode 12 eine entsprechende dichtere Gasglocke erzeugt werden.

## Patentansprüche

1. Gaslinse (4) für einen WIG/TIG-Schweißbrenner (1) mit einer Gasdüse (9) mit einem bevorzugt einteiligen Grundkörper (10), der im Zentrum eine durchgehende Öffnung (11) für eine Elektrode (12) und Bohrungen (16) für die Zuführung eines Gases (7, 27) aufweist, wobei zur Verteilung des Gases (7, 27) zumindest ein Gaslinsensieb (20) in einem Gasverteilungskanal (15) des Grundkörpers (10) angeordnet ist, wobei im Gasverteilungskanal (15) des Grundköpers (10) ein Einsatzelement (17) mit einer Bohrung (23) im Zentrum zum Durchführen einer nichtabschmelzenden Elektrode (12) angeordnet ist, und wobei in Richtung der Ausströmung des Gases (7, 27) gesehen nach dem Einsatzelement (17) ein Gaslinsensieb (20) angeordnet ist, **dadurch gekennzeichnet, dass** um die Bohrung (23) fächerförmige Strömungselemente (24) ausgebildet sind, die in Bezug zur Ebene der Bohrung (23) verdreht ausgebildet sind, sodass eine radiale Ablenkung eines durchströmenden Gases (7, 27) erfolgt.

2. Gaslinse (4) nach Anspruch 1, **dadurch gekennzeichnet, dass** der Grundkörper (10) eine Länge zwischen 20 mm und 30 mm aufweist.

3. WIG/TIG-Schweißbrenner (1), mit einem Brennergriff (3) und einem Brennerkörper (2), einer Gasdüse (9) und mit einer Gaslinse (4) mit einem bevorzugt einteiligen Grundkörper (10), der im Zentrum eine durchgehende Öffnung (11) für eine Elektrode (12) und Bohrungen (16) für die Zuführung eines Gases (7, 27) aufweist, wobei zur Verteilung des Gases (7, 27) zumindest ein Gaslinsensieb (20) in einem Gasverteilungskanal (15) des Grundkörpers (10) angeordnet ist, **dadurch gekennzeichnet, dass** im Gasverteilungskanal (15) des Grundkörpers (10) der Gaslinse (4) ein Einsatzelement (17) mit einer Bohrung (23) im Zentrum zum Durchführen der Elektrode (12) angeordnet ist, um welche Bohrung (23) fächerförmige Strömungselemente (24) ausgebildet sind, die in Bezug zur Ebene der Bohrung (23) verdreht ausgebildet sind, sodass eine radiale Ablenkung des durchströmenden Gases (7, 27) erfolgt, und dass in Richtung der Ausströmung des Gases (7, 27) gesehen nach dem Einsatzelement (17) ein Gaslinsensieb (20) angeordnet ist.

4. WIG/TIG-Schweißbrenner (1) nach Anspruch 3, **dadurch gekennzeichnet, dass** im Brennerkörper (3), insbesondere in der Gaslinse (4) eine Lichtbogendüse (13) zur Führung von zwei Gasen (7, 27) zur Bildung eines Zweigas-Schweißbrenners einsetzbar ist.

## Claims

1. A gas lens (4) for a WIG/TIG welding torch (1) with a gas nozzle (9) which has a preferably one-piece base body (10), the latter having a continuous opening (11) in the center for an electrode (12), and bores (16), for feeding a gas (7, 27), wherein at least one gas-lens filter (20) is provided in a gas-distribution channel (15) of the base body (10) for distributing the gas (7, 27), wherein an insertion element (17) with a bore (23) in the center through which a non-consumable electrode (12) is to be guided is positioned within the gas-distribution channel (15) of the base body (10), and wherein a gas-lens filter (20) is arranged downstream of the insertion element (17), seen in the outflow direction of the gas (7, 27), **characterised in that** fan-shaped flow elements (24) are formed around the bore (23), with said flow elements being twisted relative to the plane of the bore (23) so as to provide for radial deviation of a gas (7, 27) flowing therethrough.

2. The gas lens (4) according to claim 1, **characterised in that** the base body (10) has a length of from 20 mm to 30 mm.

3. A WIG/TIG welding torch (1) comprising a torch handle (3) and a torch body (2), a gas nozzle (9), and a gas lens (4) with a preferably one-piece base body (10), the latter having a continuous opening (11) in the center for an electrode (12), and bores (16), for feeding a gas (7, 27), wherein at least one gas-lens filter (20) is provided in a gas-distribution channel (15) of the base body (10) for distributing the gas (7, 27), **characterized in that** an insertion element (17) with a bore (23) in the center through which the electrode (12) is to be guided is positioned within the gas-distribution channel (15) of the base body (10) of the gas lens (4), around which bore (23) fan-shaped flow elements (24) are formed, with said flow elements being twisted relative to the plane of the bore (23) so as to provide for radial deviation of the gas (7, 27) flowing therethrough, and **in that** a gas-lens filter (20) is arranged downstream of the insertion element (17), seen in the outflow direction of the gas (7, 27).

4. The WIG/TIG welding torch (1) according to claim 3, **characterised in that** an electric-arc nozzle (13) is insertable into the torch body (2), in particular into the gas lens (4), for guiding two gases (7, 27) so as to form a double-gas welding torch.

## Revendications

1. Lentille de gaz (4) pour un chalumeau de soudage à l'arc TIG (1), comprenant une buse à gaz (9) avec un corps de base (10) de préférence d'une seule pièce, qui présente, au centre, une ouverture traversante (11) pour une électrode (12) et des perçages (16) pour l'acheminement d'un gaz (7, 27), dans laquelle, pour distribuer le gaz (7, 27), au moins un tamis de lentille de gaz (20) est agencé dans un canal de distribution de gaz (15) du corps de base (10), dans laquelle un élément rapporté (17) ayant un perçage (23) est ménagé au centre du canal de distribution de gaz (15) du corps de base (10) pour y faire passer une électrode non fusible (12) et dans laquelle, observé dans le sens d'échappement du gaz (7, 27), un tamis de lentille de gaz (20) est agencé après l'élément rapporté (17), **caractérisée en ce qu'**autour du perçage (23) sont formés des éléments d'écoulement (24) en forme d'éventail, qui sont déformés par rapport au plan du perçage (23) de manière à provoquer une déviation radiale d'un gaz de passage (7, 27).

2. Lentille de gaz (4) selon la revendication 1, **caractérisée en ce que** le corps de base (10) présente une longueur comprise entre 20 mm et 30 mm.

3. Chalumeau de soudage à l'arc TIG (1), comprenant un manche de chalumeau (3) et un corps de chalumeau (2), une buse à gaz (9) et une lentille de gaz (4) avec un corps de base (10) de préférence d'une seule pièce qui présente, au centre, une ouverture traversante (11) pour une électrode (12) et des perçages (16) pour l'acheminement d'un gaz (7, 27), dans lequel, pour distribuer le gaz (7, 27), au moins un tamis de lentille de gaz (20) est agencé dans un canal de distribution de gaz (15) du corps de base (10), **caractérisé en ce qu'**un élément rapporté (17) ayant un perçage (23) est agencé au centre du canal de distribution de gaz (15) du corps de base (10) de la lentille de gaz (4) pour faire passer l'électrode (12), autour duquel perçage (23) sont formés des éléments d'écoulement (24) en forme d'éventail, qui sont déformés par rapport au plan du perçage (23) de manière à provoquer une déviation radiale du gaz de passage (7, 27) et **en ce qu'**observé dans le sens d'échappement du gaz (7, 27), un tamis de lentille de gaz (20) est agencé après l'élément rapporté (17).

4. Chalumeau de soudage à l'arc TIG (1) selon la revendication 3, **caractérisé en ce que**, dans le corps de chalumeau (3), en particulier dans la lentille de gaz (4), on peut insérer une buse à arc électrique (13) pour acheminer deux gaz (7, 27) dans le but de former un chalumeau de soudage à deux gaz.
